(19) Europäisches Patentamt

European Patent Office

Office européen des brevets

(11) **EP 2 770 764 B1**

(12) **EUROPEAN PATENT SPECIFICATION**

(45) Date of publication and mention of the grant of the patent:
**15.04.2015 Bulletin 2015/16**

(51) Int Cl.:
***H04W 24/10*** *(2009.01)*   *H04W 76/02* *(2009.01)*
*H04W 8/00* *(2009.01)*

(21) Application number: **13305202.7**

(22) Date of filing: **22.02.2013**

(54) **Methods and devices for network assisted beaconing**

Verfahren und Vorrichtungen zur netzwerkunterstützten Bakenübertragung

Procédés et dispositifs de balisage assisté par réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.08.2014 Bulletin 2014/35**

(73) Proprietor: **ALCATEL LUCENT**
**92100 Boulogne-Billancourt (FR)**

(72) Inventors:
• **Fonseca dos Santos, André**
**70435 Stuttgart (DE)**
• **Wild, Thorsten**
**70435 Stuttgart (DE)**
• **Schaich, Frank**
**70435 Stuttgart (DE)**
• **Doetsch, Uwe**
**70435 Stuttgart (DE)**

(74) Representative: **Lück, Stephan**
**Alcatel-Lucent Deutschland AG**
**Intellectual Property & Standards**
**Lorenzstraße 10**
**70435 Stuttgart (DE)**

(56) References cited:
**WO-A1-2012/113136    US-A1- 2011 258 313**

## Description

### Field of the invention

The present invention refers to a method, device and computer program product for network assisted beaconing.

### Background

In known cellular radio access networks such as the Long Term Evolution (LTE) access network or the UMTS Radio Access Network (UTRAN), terminals registered with the same radio cell communicate with each other over a base station.

In order to allow for a more efficient communication between terminals that are located close to each other, device to device communication may be performed with the terminals exchanging data directly with each other without using a base station for relaying the data. Device to device communication may be network assisted, i.e. a cellular access network may coordinate the direct data communications between the individual terminals. In particular, establishing of device-to-device links, resource allocation and reliability control may be performed by the network, whereas the data exchange on a device-to-device link may be carried out directly between the devices without routing the data to be exchanged over the base station or another network element of an access network.

Prior to the establishment of a device-to-device link, the network needs to know which radio terminals registered with the cellular access network are located sufficiently close to each other so that device-to-device communication can be carried out between these terminals. In other words, peer discovery and channel state information estimation procedures are required.

According to known device-to-device communication approaches, simple beaconing schemes are applied. Simple beaconing schemes are not well suited for access network that have a large number of different radio transmission resources (e.g. frequencies, time intervals or codes) because they either are time-consuming due to extensive scanning operations or inefficient due to overhead caused by transmission of beacon signals. Moreover, by using a large amount of radio transmission resources for the transmission of beacon signals, power consumption of the terminals is increased.

The published patent application US 2011/0258313 A1 discloses a method for network assisted peer discovery. According to this method, one device in a group of devices is requested to transmit a proximity detection signal.

In WO 2012/113136 A1, a method and apparatus for establishing a device-to-device connection is disclosed. This method comprises configuring a set of terminals to function as a WiFi access point and to repeatedly transmit beacon signals.

### Summary

The object of the present invention is to provide methods and devices for network-assisted beaconing that allow for quick peer discovery and device-to-device channel estimation and that operate efficiently consuming a small amount of radio transmission resources.

This object is solved by a method according to claim 1, a network element according to claim 8, a method according to claim 10 and a radio terminal according to claim 14.

According to an embodiment, a method is provided, the method comprising instructing a first group of multiple terminals of a wireless network to transmit a pilot sequence over a first portion of radio transmission resources; instructing a second group of multiple terminals of the wireless network to receive a signal over the first portion of radio transmission resources; receiving from the terminals of the second group measurement data that characterize the signal received by the terminals; and estimating a channel between at least one pair of terminals of the first group or the second group depending on the measurement data.

By instructing multiple terminals to transmit the pilot sequence on the same portion of radio transmission resources beaconing can be performed for a group of terminals using a single portion of radio transmission resources. In other words, the terminals of the first group transmit the pilot sequences on the same portion of radio resources and the pilot sequences transmitted by the individual terminals of the first group are superimposed on each other. Because the measurement data is collected from the terminals, the measurement data can be processed in the network and power consumption of the terminals can thereby be reduced. Basically, the measurement data generated by multiple terminals are combined in order to estimate the channel between the at least one pair of terminals.

Estimating the channel includes channel discovery, i.e. detecting whether or not device-to-device communication is possible between two terminals, and channel state information estimation, i.e. determining transmission characteristics of a discovered channel.

The method may be applied in connection with a cellular network. Accordingly, the method may comprise subdividing the radio transmissions into multiple portions of radio transmission resources according to frequency, time, code, etc. For example, in the Long Term Evolution (LTE) system and its successors, radio transmission resources are subdivided according to frequency and time into Physical Resource Blocks (PRB). That is, a portion of radio resources used in the present method may comprise one PRB or multiple PRB.

In an embodiment, the measurement data characterizes a power of the signal received by the respective terminal of the second group. Said measurement data describing the power of the received signal can be easily calculated and can be encoded into a rather low number of bits. A transmission of this measurement data from a terminal to the network consumes little radio resources.

In particular in embodiments where the measurement data include the power of the received signal, the method may comprise instructing the second group of multiple terminals to transmit a pilot sequence over a second portion of radio resources; instructing the first group of multiple terminals to receive the signal over the second portion of radio resources; and receiving from the terminals of the first group of terminals the measurement data. When generating and gathering additional measurement data related to the second portion of radio resources, the reciprocity of the channels to be estimated can be exploited to construct a system of equations that describes the characteristics of the channels to be estimated. Accordingly, estimating these channels may include solving this system of equations. Because, in a preferred embodiment, the system of equations may be solved on a network element of a fixed part of the wireless network, a solution (i.e. the channel characteristics) can be found quickly without consuming scarce processing resources or battery power of the terminals.

In another embodiment, the measurement data characterizes a course of the received signal in time or a compressed representation thereof. When using measurement data that include information about the course of the received signal, a large number channels can be estimated.

In an embodiment, instructing the terminals of the first group of terminals and/or the second group of terminals to transmit the pilot sequence comprises assigning a unique pilot sequence to said terminals such that the terminals that transmit on the same portion of radio transmission resources use different pilot sequences. Using individual pilot sequences for each terminal of the group of terminals that is instructed to transmit a pilot sequence, allows - at least to some extent - to separate pilot sequences at the receiver side.

A particularly good separation of the pilot sequences from each other can be achieved if an embodiment is provided, wherein the pilot sequences assigned to the terminals are orthogonal or semi-orthogonal to each other.

In an embodiment, the method is executed multiple times with different terminals included in the first group and the second group in the different times of execution of the method. As a consequence, the channels can be estimated successively in different runs of the method.

According to another embodiment of the invention, a network element for a radio access network is provided, the network element being operable for instructing a first group of multiple terminals of a wireless network to transmit a pilot sequence over a first portion of radio transmission resources; instructing a second group of multiple terminals of the wireless network to receive a signal over the first portion of radio transmission resources; receiving from the terminals of the second group measurement data that characterize the signal received by the terminals; and estimating a channel between at least one pair of terminals of the first group or the second group depending on the measurement data.

In a preferred embodiment, the network element is operable, preferably programmed for executing the method for network assisted beaconing. To this end, the network element may comprise a processor and a storage element. The storage element may comprise a computer program that is programmed such that the processor executes the method when running the computer program.

According to yet another embodiment of the invention, a further method for network assisted beaconing is provided, the method comprising receiving from a wireless access network an instruction indicating a portion of radio transmission resources; and depending on the instruction, transmitting a pilot sequence on the portion of radio resources, receiving a signal on the portion of radio resources and/or transmitting measurement data that characterize the received signal.

In an embodiment, the method comprises determining a specific pilot sequence depending on the instruction.

In an embodiment, the measurement data comprise at least one value that describes a power of the received signal.

In another embodiment, the measurement data comprise a course of the received signal in time or a compressed representation thereof.

According to still another embodiment of the invention a radio terminal for a wireless network is provided, the radio terminal being operable for receiving from a wireless access network an instruction indicating a portion of radio transmission resources; and depending on the instruction, transmitting a pilot sequence on the portion of radio resources, receiving a signal on the portion of radio resources and/or transmitting measurement data that characterize the received signal.

In an embodiment, the radio terminal is operable, preferably programmed for executing the further method. The radio terminal may comprise a processor and a storage element, the storage element comprising a computer program. The computer program may be programmed for executing the further method when run on the processor.

**Brief description of the figures**

Exemplary embodiments and further advantages of the present invention are shown in the Figures and described in detail hereinafter.

| Figure 1 | shows a communication network according to an embodiment; |
| Figure 2 | shows a flow-chart of a method for network assisted beaconing that may be executed on a network element of an access network shown in Figure 1; |
| Figure 3 | shows a flowchart of a further method for network assisted beaconing that may be executed on a terminal of the network shown in Figure 1; and |
| Figures 4a and 4b | show diagrams of pilot sequence transmissions between four terminals of the network shown in Figure 1. |

Description of the embodiments

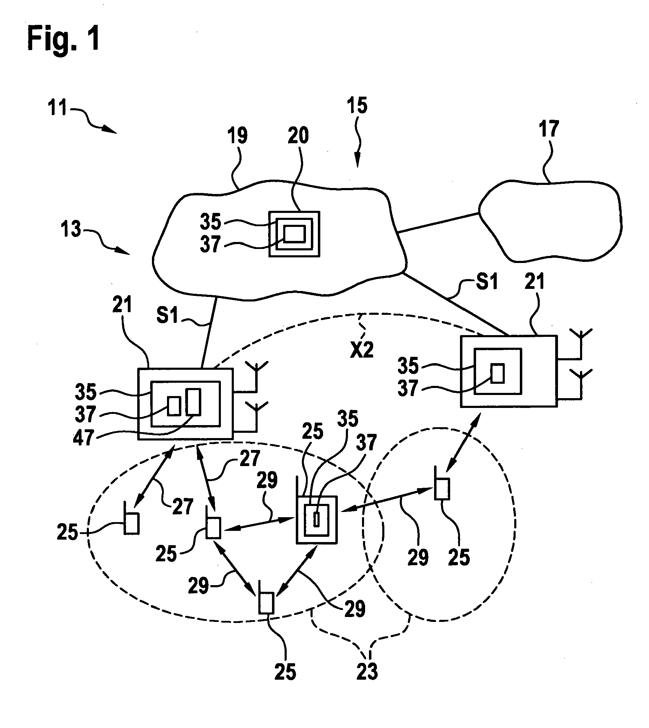

Figure 1 shows a communication network 11 comprising a fixed part 13 of a mobile communication system 15 connected to a wide area network 17 such as the Internet. The fixed part 13 has a backhaul network 19 to which one or more access network elements, such as base stations 21, are connected. The backhaul network 19 may further comprise a further network element 20 that may be connected to the backhaul network 19 or - as shown in Figure 1 - be part of the backhaul network 19. In addition, the mobile communication system 15 may comprise a core network (not shown). In addition, the core network may include at least one further network element.

In the shown embodiment, the mobile communication system 15 is a cellular system and a coverage area of the system 15 is subdivided in multiple radio cells 23, where neighbouring radio cells 23 may overlap with each other as shown in Figure 1. Each radio cell 23 of the system 15 is managed by one base station 21. For managing a radio cell 23, the base station 21 may transmit cellular beacon signals or cellular pilot signals that allow for discovering the radio cells 23. In particular, a radio terminal 25 of the system 15 may scan the radio spectrum for the beacon signal or pilot signal transmitted by the base stations 21 in order to detect the cells 23 defined by the respective base station 21 and for synchronizing itself with the base station 21.

Managing a radio cell 23 may include subdividing the total amount of radio resources assigned to the cell 23 or to the whole system 15 (e.g. one or more radio frequency bands) into multiple portions of radio resources. For example, the radio resources may be subdivided according to time, e.g. by assigning defined time intervals to the individual portions of radio resources. For this end, the base station 21 may define a framing structure. Moreover, the radio resources may be subdivided according to frequency by defining comparatively small frequency ranges that correspond to portions of radio transmission resources. Typically, both approaches (subdivision according to time and subdivision according to frequency) are combined and a portion of radio resources is defined by a time interval and a frequency range.

In the shown embodiment, the mobile communication system 15 is a Long Term Evolution (LTE) system or a LTE advanced system that has been extended with functions related to device-to-device communication. According to the technical specification of LTE, the radio transmission resources are subdivided into portions of radio resources according to frequency and time, which portions are referred to as Physical Resource Blocks (PRB). In the context of LTE, the base stations 21 are also referred to as eNodeB, the wireless terminals 25 are also referred to as User Equipment (UE). An interface between the base stations 21 and network elements 20 of a core network is referred to as S1 interface. An interface used for inter base station communication is referred to as X2 interface. Although the present embodiments are based on LTE, the application of the present invention is not limited to that system. It can also be applied in connection with other mobile communication systems such as UMTS or WCDMA.

The system 15 supports classical cellular communication as known from existing systems such as LTE, UMTS, etc. For cellular communication, a cellular communication channel 27 is established between a terminal 25 and a base station 21. In existent systems, terminals 21 communicate over cellular channels 27 via a base station 21 even if they are located close to each other and could communicate with each other directly without sending data over the cellular channels 27.

It is currently discussed to provide future wireless communication systems (so-called fifth generation or 5G systems) with functions that allow for direct communication between the terminals 25 without convoying the data to be communicated to the base station 21. Direct communication between terminals 25 is also referred to as Device-To-Device (D2D) communication. For device-to-device communication, a device-to-device channel 29 may be established between two terminals 25. However, device-to-device channels 29 can only be established if the terminals 25 that want to communicate directly with each other are located close enough to each other so that direct radio communication is possible. In order to identify pairs or groups of terminals 25 that can perform device-to-device communication, peer discovery or device device-to-device channel state estimation procedures must be carried out (further also referred to as "channel estimation"). In the shown embodiment, the base stations 21 are involved in these procedures. Generally, systems 15 that allow for device-to-device communication and include network elements 20, 21 of the fixed part 13 of the system into management and/or control functions of device-to-device communication, are referred to as system that perform network-assistant device-to-device communication. That is, the management and/or control of the device-to-device communication, in particular discovery and assignment of radio resources used for device-to-device communication, is supported by the network, whereas the terminals 25 exchange the payload data directly over a device-to-device channel 29 without involving a base station 21.

For efficient device-to-device communication, discovery and estimation of the device-to-device channels 29 must be fast and should not consume a large amount of radio resources. Some approaches for channel discovery that are currently under discussion consider either the exploitation of some information that might be available in the system 15 such as the estimated location of the individual terminals 25 or they rely on the transmission of beacon signals between the terminals 25 and the base stations 21. However, location-based approaches do not provide reliable information on the device-to-device channels 29 and beacon signals consume a significant amount of radio resources.

For improving the device-to-device channel discovery and estimation, the embodiments described herein use an advanced beacon signal based approach. According to these embodiments, a first group G1 of terminals 25 is defined, where the terminals 25 of the first group G1 transmit a pilot sequence simultaneously via the same radio transmission resources (e.g. using the same PRB or PRBs) so that the pilot sequences transmitted by the individual terminals of the first group G1 are superimposed on each other. Preferably, the terminals of the group use different pilot sequences for transmitting the beacon signal. Terminals 25 belonging to a second group G2 of terminals 25 receive the superimposed pilot sequences and communicate measurement data that describe the received pilot sequences to the fixed part 13, in particular to a base station 21. A network element 20, 21 of the fixed part 13 processes the measurement data in order to discover the device-to-device channels 29 and to estimate the discovered device-to-device channels 29. This beaconing approach not only saves radio resources by using a single portion of radio resources for transmission of multiple superimposed pilot sequences but also relieves the terminals 25 from processing the measurement data because measurement data processing is assigned to the fixed part 13.

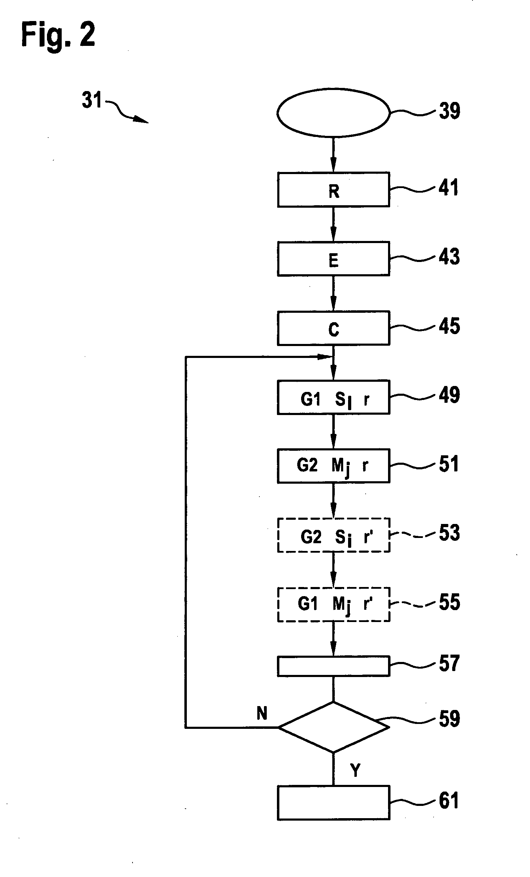

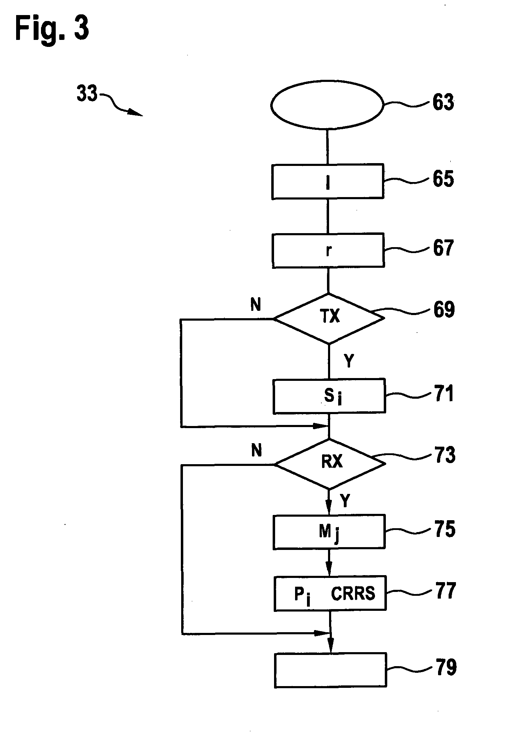

Since the beaconing approach used in the embodiments described herein is network assisted, at least two methods and devices that carry out the method are present. The first method 31 shown in Figure 2 may be executed on a network element of the network 11 such as a base station 21, or further network elements 20 being part of the access network of the system 15 or the core network of the system 15. A second method 33 shown in Figure 3 may be executed on a terminal 25.

The base stations 21 or the further network elements 20 may include a processor 35 arranged for executing the first method 31. In an embodiment, the processor 35 may comprise a programmable computer having a storage element 37. A computer program may be stored on this storage element 37, which computer program may be programmed for executing the first method 33.

Similarly, the radio terminals 25 may comprise a further processor 35 arranged for executing the second method 33. The further processor 35 may comprise a programmable computer including a further storage element 37. A further computer program may be stored on the further storage element 37, which computer program is programmed for executing the second method 33 when run by the further processor 35. In Figure 1, the further processor 35 and the further storage element 37 are labelled with the same reference signs as the processor 45 and the storage element 47 of the base stations 21 or the at least one further network element 20 of the core or access network.

Referring to Figure 2, the first method 31 will be described in more detail. After a start 39 of the method, a step 41 is executed for subdividing the total amount of radio resources R assigned to the system 15 or to the certain cell 23 into multiple portions of radio transmission resources. In an embodiment, the operations of step 41 may also performed for classical cellular communication because existing systems such as LTE define blocks of radio transmission resources (in LTE referred to as Physical Resource Blocks, PRBs) to be used by a scheduler of the system 15 to assign radio transmission resources to the individual cellular channels 27. Preferably, the first method 31 relies on the same definition of portions of radio resources as used for scheduling cellular communications. In LTE, a single portion of radio transmission resources R may correspond to one or more PRB. In a preferred embodiment, a portion of radio transmission resources R corresponds to a single PRB. In another embodiment, a portion of radio transmission resources corresponds to a plurality of PRBs, preferably adjacent to each other in the frequency and/or time domain.

After step 41, a step 43 is carried out that waits for a triggering event E that triggers discovery and estimation of device-to-device channels 29. The triggering event E may be generated by a network element of the fixed part 13 of the system 15, e. g. a base station 21, which decides to search for possible terminals 25 for offloading cellular communication performed over cellular channels 27. The event E may also be caused by a terminal 25 that wants to establish a device-to-device channel 29 to another terminal 25. In an embodiment, a terminal 25 may transmit a signalling message to a base station 21 in order to generate the triggering event E. In another embodiment, further types of triggering events E may be present. For example, the event E may be generated by a timer at a pre-defined time or periodically.

In response to the triggering event E a step 45 may be executed that determines a candidate set C of terminals 25 that may be suitable for device-to-device communication. To this end, step 45 may access a database 47 (see Figure 1) that may be located e. g. in a base station 21 or in another network element of the network 11. In an embodiment, the database 47 may be updated with information about the terminals gathered during control and management operations of cellular communication. For example, the database 47 may include a list of terminals 25 registered with a radio cell 23 handled by a certain base station 21 and/or a list of terminals 25 registered with a neighbouring cell 23. In this embodiment, the candidate list C may include the terminals 25 registered with a certain cell 23 and/or at least one neighbouring cell 23.

After step 45, a step 49 is performed that defines a first group G1 of terminals 25 that shall transmit a pilot sequence $S_i$ on the same portion r of radio transmission resources R. A different pilot sequence $S_i$ is assigned to each terminal 25 of the first group G1. In one embodiment, the pilot sequences $S_i$ are orthogonal or semi-orthogonal to each other. In another embodiment, the pilot sequences $S_i$ are not orthogonal to each other.

In a further step 51, a second group G2 of terminals 25 is identified that shall receive a signal on the same portion r of radio resources R assigned to the terminals of the first group G1 and generate measurement data $M_j$ that characterize the received signal and communicate the measurement data $M_j$ to the network element that executes the first measurement 31. Step 49 may include instructing the terminals 25 of the first group G1 to transmit the pilot sequence $S_i$ on the portion r of radio resources. Step 51 may include instructing the terminals 25 of the second group G2 to receive the signal on the same portion of radio resources r and to return the measurement data $M_j$.

Depending on the capabilities of the terminals 25 of the groups G1, G2, the groups G1 and G2 may be disjunctive or not. In case that the pilot sequence transmission cannot be performed in full-duplex - i.e. terminals 25 cannot receive and transmit a pilot sequence $S_i$ simultaneously - the groups G1, G2 should be disjunctive, $G1 \cap G2 = \emptyset$. Otherwise, at least one terminal 25 may be member of the first group G1 and of the second group G2. Moreover, the groups can be identical, G1 = G2.

In particular, when using non-orthogonal pilot sequences $S_i$, the method 31 may comprise two optional steps 53 and 55. In step 53, the method 31 instructs the terminals 25 of the second group G2 to transmit certain pilot sequences $S_i$ over a second portion $r' \neq r$ of radio transmission resources. Step 55 comprises instructing the terminals 25 of the first group G1 to listen on this portion r' of radio transmission resources R, generating measurement data $M_j$ and reporting back the measurement data $M_j$. The measurement data $M_j$ generated in steps 51 and 55 can be included in a system of equations (described in detail below) that can be solved in order to estimate the device-to-device channels 29 even in cases where the pilot sequences $S_i$ are not orthogonal to each other by exploiting the reciprocity of the channels 29 to be estimated. There are no restrictions regarding the selection of the second portion r' of radio resources R. In an embodiment, the second portion r' corresponds to the same frequency but a later time instance (relative to the fist portion r).

In a step 57, first method 31 collects the measurement data $M_j$ from the terminals 25 of the two groups G1, G2 and estimates the device-to-device channels 29 between the terminals 25. Channel estimation includes both discovering that device-to-device channel 29 is present as well as estimating channel state information related to a discovered device-to-device channel 29.

A branch 59 of the first method 31 checks whether a sufficient number of device-to-device channels 29 has been estimated. If so, (Y) the method terminates in a step 61. Otherwise (N), the first method 31 goes back to step 49 so that the above-described operations can be performed with different terminals 25 included in the groups G1 and G2 respectively. By iteratively executing the steps 49, 51, 53, 55 and 57, the device-to-device channels 29 can be estimated successively. However, in some embodiments, e. g. when the terminals 21 can do full-duplex transmissions and if there is a sufficiently high number of different pilot sequences $S_i$ available, then all required device-to-device channels 29 can be estimated in one iteration and branch 59 does not need to go back to step 49. It should be noted that not every theoretically possible combination of terminals 25 needs to be considered to estimate a device-to-device channel between them. In particular, step 45 may select those terminals 25 that most probably can communicate directly with each other for device-to-device channel estimation.

Figure 3 shows the second method 33 that may be executed on a terminal 25 in more detail. After start 63 of the second method 33, a step 65 is executed for receiving an instruction I from the network, e. g. from a base station 21. A step 67 identifies a portion r of radio transmission resources R indicated in the instruction I received in step 65.

In branch 69, the second method 33 checks whether the instruction I includes a command to transmit a pilot sequence $S_i$ on the portion r of radio resources. If so (Y), a step 71 is executed that transmits a pilot sequence $S_i$ specified in the instruction I on the portion r of radio transmission resources R. Otherwise (N), step 71 is skipped.

A further branch 73 checks whether the instruction includes a command to receive a signal on the portion r of radio transmission resources R. If so (Y), a step 75 is executed for receiving on the portion r of radio transmission resources R and generating measurement data $M_j$ that characterize the received signal.

Then a step 77 transmits the measurement data $M_j$ to the network element of the network 11 from which the terminal 25 has received the instruction. In an embodiment, the measurement data $M_j$ include a value describing the signal power of $P_i$ of the received signal. In another embodiment, the measurement data $M_j$ include the course of the received signal over time. In order to transmit the measurement data efficiently, compressed representation of the received signal CRRS may be generated and transmitted. After step 77, the second method 33 is terminated.

If the branch 73 decides that the instruction I does not include a command for receiving on the portion r of radio transmission resources R (N), then steps 75 and 77 are skipped and the second method 33 is terminated in step 79.

In the following, an embodiment is described that estimates the device-to-device channels 29 depending on information about the power $P_{r1}$, $P_{r2}$, $P_{r3}$, $P_{r4}$ of the signals received by the terminals 25. When using the values describing the signal power, the pilot sequences Si need not to be orthogonal to each other. For example, when considering four terminals 25, further referred to as D1, D2, D3 and D4, the terminals D1 and D2 may transmit at the same portion r of radio transmission resources R and using pilot sequences $S_1$ and $S_2$ respectively. The devices D3 and D4 may be instructed to receive a signal on that portion r of radio resources. In other words, the first group may include D1 and D2, G1 = {D1, D2}. The second group G2 may include the remaining terminals, G2 = {D3, D4}.

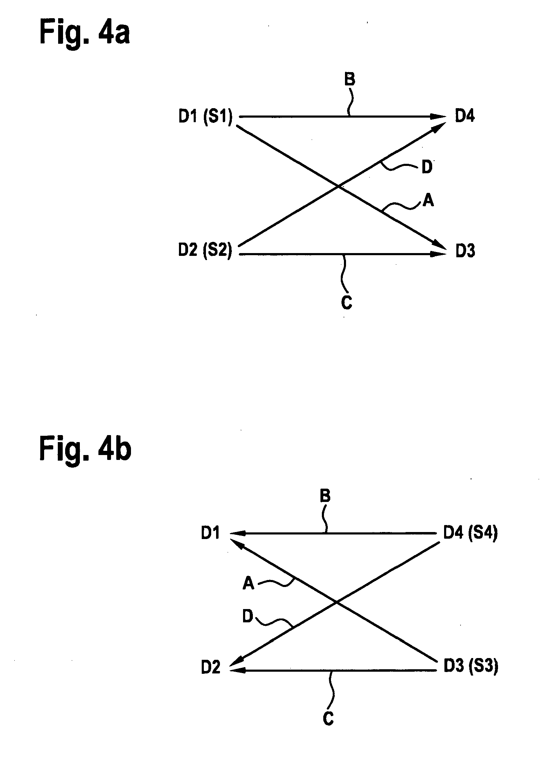

The diagram on Figure 4a shows the situation where the terminals D1 and D2 are transmitting. This situation occurs after the terminals D1, D2, D3 and D4 have been instructed accordingly by steps 49 and 51 of the first method 31. In steps 53 and 55 the roles of the terminals D1, D2, D3 and D4 are exchanged and the situation shown in the diagram on Figure 4b occurs.

The received signal $r_i$, in element (1, 2, 3, 4) at each terminal D1, D2, D3 and D4 consists of

$$
\begin{aligned}
r_1 &= S_3 h_{31} + S_4 h_{41} + n \\
r_2 &= S_3 h_{32} + S_4 h_{42} + n \\
r_3 &= S_1 h_{13} + S_2 h_{23} + n \\
r_4 &= S_1 h_{14} + S_2 h_{24} + n
\end{aligned}
\tag{1}
$$

The symbol $h_{ij}$ is an element of a channel matrix describing the channel from terminal $D_i$ to terminal $D_j$. The symbol n refers to Additive White Gaussian Noise (AWGN). For the sake of simplicity, the AWGN will be neglected.

Assuming channel reciprocity (i.e. $h_{ij}=h_{ji}$), equation (1) can be rewritten as

$$
\begin{aligned}
r_1 &= S_3 A + S_4 B \\
r_2 &= S_3 C + S_4 D \\
r_3 &= S_1 A + S_2 C' \\
r_4 &= S_1 B + S_2 D
\end{aligned}
\tag{2}
$$

where A=$h_{31}$=$h_{13}$, B=$h_{41}$=$h_{14}$, C=$h_{32}$=$h_{23}$ and D=$h_{42}$=$h_{24}$. As shown in the flowcharts of Figures 2 and 3, the terminals D1, D2, D3, D4 feed information on the power of the received signal back to the network. Assuming that the pilot sequences $S_i$ are of unitary power, the received power $P_{ri}$ of the signal received at the individual terminals 25 is calculated in step 57 as follows

$$
\begin{aligned}
P_{r1} &= P_A + P_B \\
P_{r2} &= P_C + P_D \\
P_{r3} &= P_A + P_C \\
P_{r4} &= P_B + P_D
\end{aligned}
\tag{3}
$$

In equation (3), $P_A$, $P_B$, $P_C$, $P_D$ represent the contribution of the individual device-to-device links 29 to the total received power $P_{ri}$, i= 1, .., 4, received at the terminal D1, D2, D3, D4. Therefore, step 57 has four values received in the form of the measurement data $M_j$ from the terminals and can compose a system of four equations and four variables. In this way, the quality of the device-to-device channels can be estimated by solving this system of equations. Because the overall signal power is considered for estimating the device-to-device channels, the pilot sequences $S_i$ need not to be orthogonal. Note that there are six possible device-to-device channels between the four terminals D1, D2, D3, D4. Either by starting another beaconing phase, using a respectively changed grouping of devices (e. g. by going back to step 49 in branch 59), the missing channels 29 can be estimated. However, in some scenarios not all possible channels between the devices D1, D2, D3, D4 are of interest and the groups G1, G2 can be chosen such that the links of interest are estimated. The pre-selection of possible channels 29 of interest may be done in step 45 e.g. by relying of data stored in the database 47.

In another embodiment, the first method 31 relies on the course of the signal received by the terminals 25 in time. Therefore, the measurement reports $M_j$ fed back by the terminals 25 describe the whole received signals $r_j$. Furthermore, the pilot sequences $S_i$ assigned to the individual terminals of the first group G1 are orthogonal or at least semi-orthogonal with respect to each other. In this case, the received signal $r_i$ at a terminal i is given as

$$r_i = S_j h_{ji} + \sum_{m \neq j} S_m h_{mi} + n \qquad (4)$$

Therefore the channel $h_{ij}$ can be estimated as

$$\hat{h}_{ji} = r_i S_j \qquad (5)$$

by exploiting the orthogonality of the pilot sequences, $S_i S_m = 0$, $i \neq j$.

In this embodiment, all possible device-to-device channels 29 could be estimated by a large number of terminals 25 which share the same portion of radio resources. The only limitation is the number of different orthogonal sequences $S_i$ to be used by the individual terminals 25 of the first group G1. In this embodiment, the step 53 and 55 of the first method 31 may be omitted.

To sum up, the embodiments described herein provide an efficient and fast approach for estimating device-to-device channels 29 (i.e. discovering device-to-device channels 29 and estimating the channel state information of the discovered device-to-device channels 29). Furthermore, processing of the measurement data $M_j$ is carried out in the network and in particular the system of equations (3) may be solved in the network or the calculation of equation (5) may be performed in the network 11. The methods 31, 33 may be applied in combination with terminals 25 that can perform full-duplex transmissions, i.e. transmit to the pilot sequence $S_i$ and simultaneously receive on the same portion of radio resources as well as in combination with terminals that cannot transmit a pilot sequence $S_i$ and receive a signal on the same portion of radio resources simultaneously.

## Claims

1. Method (31) for network assisted beaconing, the method being performed by a network element (20, 21) for a wireless access network (11) and comprising

   - instructing (49) a first group of at least one terminal (25) of the wireless access network (11) to transmit a pilot sequence;
   - instructing (51) a second group of at least one terminal (25) of the wireless access network (11) to receive a signal over a first portion of radio transmission resources;
   - receiving (51) from the terminals (25) of the second group measurement data that characterize the signal received by the terminals; and
   - estimating (57) a channel (29) between at least one pair of terminals (25) of the first group or the second group depending on the measurement data;

   **characterized in that** the first group and the second group include multiple terminals (25), wherein the multiple terminals (25) of the first group are instructed to transmit the pilot sequence simultaneously over the first portion of radio transmission resources.

2. Method (31) according to claim 1, wherein the measurement data characterizes a power of the signal received by the respective terminal (25).

3. Method (31) according to claim 2, wherein the method (31) comprises instructing (53) the second group of multiple terminals (25) to transmit a pilot sequence over a second portion of radio resources; instructing (55) the first group of multiple terminals (25) to receive the signal over the second portion of radio resources; and receiving (55) from the terminals (25) of the first group of terminals the measurement data.

4. Method (31) according to claim 1, wherein the measurement data characterizes a course of the received signal in time or a compressed representation thereof.

5. Method (31) according to one of the precedent claims, wherein instructing the terminals of the first group of terminals and/or the second group of terminals to transmit the pilot sequence comprises assigning a unique pilot sequence to said terminals (25) such that the terminals that transmit on the same portion of radio transmission resources use different pilot sequences.

6. Method (31) according to one of the precedent claims wherein the pilot sequences assigned to the terminals (25) are orthogonal or semi-orthogonal to each other.

7. Method (31) according to one of the precedent claims, wherein the method (31) is executed (59) multiple times with different terminals (25) included in the first group and the second group in the different times of execution of the method (31).

8. Network element (20, 21) for a wireless access network (11), the network element (20, 21) being operable for

   - instructing (49) a first group of at least one terminal (25) of the wireless access network (11) to transmit a pilot sequence;
   - instructing (51) a second group of at least one terminal (25) of the wireless access network (11) to receive a signal over a first portion of radio transmission resources;
   - receiving (51) from the terminals (25) of the second group measurement data that characterize the signal received by the terminals; and
   - estimating (57) a channel (29) between at least one pair of terminals (25) of the first group or the second group depending on the measurement data;

   **characterized in that** the first group and the second group include multiple terminals (25), wherein the multiple terminals (25) of the first group are instructed to transmit the pilot sequence simultaneously over the first portion of radio transmission resources.

9. Network element (20, 21) according to claim 8, wherein the network element (20, 21) is operable, preferably programmed, for executing method (31) according to one of claims 2 to 7.

10. Method (33) for network assisted beaconing, the method (33) being performed by a radio terminal (25) for a wireless access network (11) and comprising

    - receiving (65) from a network element (20, 21) for the wireless access network (11) an instruction indicating a first portion of radio transmission resources; and
    - depending on the instruction, transmitting (71) a pilot sequence on the first portion of radio resources, receiving (75) a signal on the first portion of radio resources and/or transmitting (77) measurement data that characterize the received signal;

    **characterized in that** the radio terminal belongs to a second group of multiple terminals and the received signal comprises superimposed pilot sequences transmitted simultaneosly, over the first portion of radio transmission resources from multiple terminals of a first group.

11. Method (33) according to claim 10, wherein the method (33) comprises determining a specific pilot sequence depending on the instruction.

12. Method (33) according to claim 10 or 11, wherein the measurement data comprise at least one value that describes a power of the received signal.

13. Method (33) according to claim 10 or 11, wherein the measurement data comprise a course of the received signal in time or a compressed representation thereof.

14. Radio terminal (25) for a wireless access network (11), the radio terminal (25) being operable for

    - receiving (65) from a network element (20, 21) for the wireless access network (11) an instruction indicating a first portion of radio transmission resources; and
    - depending on the instruction, transmitting (71) a pilot sequence on the first portion of radio resources, receiving (75) a signal on the first portion of radio resources and/or transmitting (77) measurement data that characterize the received signal;

    **characterized in that** the radio terminal belongs to a second group of multiple terminals and the received signal comprises superimposed pilot sequences transmitted simultaneosly over the first portion of radio transmission resources from multiple terminals of a first group.

15. Radio terminal (25) according to claim 14, the radio terminal (25) being operable, preferably programmed, for executing a method according to one of claims 11 to 13.

**Patentansprüche**

1. Verfahren (31) zur netzwerkunterstützten Bakenübertragung, wobei das Verfahren durch ein Netzwerkelement (20, 21) für ein drahtloses Zugangsnetzwerk (11) durchgeführt wird und umfasst:

   - Anweisen (49) einer ersten Gruppe bestehend aus mindestens einem Endgerät (25) des drahtlosen Zugangsnetzwerks (11), eine Pilotsequenz zu übertragen;
   - Anweisen (51) einer zweiten Gruppe bestehend aus mindestens einem Endgerät (25) des drahtlosen Zugangsnetzwerks (11), über einen ersten Teil von Funkübertragungsressourcen ein Signal zu empfangen;
   - Empfangen (51) von Messdaten, welche das an den Endgeräten empfangene Signal kennzeichnen, von den Endgeräten (25) der zweiten Gruppe; und
   - Schätzen (57) eines Kanals (29) zwischen mindestens einem Endgerätepaar (25) der ersten Gruppe oder der zweiten Gruppe in Abhängigkeit von den Messdaten;

   **dadurch gekennzeichnet, dass** die erste Gruppe und die zweite Gruppe mehrere Endgeräte (25) umfassen, wobei die mehreren Endgeräte (25) der ersten Gruppe angewiesen werden, die Pilotsequenz simultan über den ersten Teil von Funkübertragungsressourcen zu übertragen.

2. Verfahren (31) nach Anspruch 1, wobei die Messdaten eine Leistung des an dem jeweiligen Endgerät (25) empfangenen Signals kennzeichnen.

3. Verfahren (31) nach Anspruch 2, wobei das Verfahren (31) das Anweisen (53) der zweiten Gruppe von mehreren Endgeräten (25), eine Pilotsequenz über einen zweiten Teil von Funkressourcen zu übertragen; das Anweisen (55) der ersten Gruppe von mehreren Endgeräten (25), das Signal über den zweiten Teil von Funkressourcen zu empfangen; und das Empfangen (55) der Messdaten von den Endgeräten (25) der ersten Gruppe von Endgeräten umfasst.

4. Verfahren (31) nach Anspruch 1, wobei die Messdaten einen zeitlichen Verlauf des empfangenen Signals oder eine komprimierte Darstellung davon kennzeichnen.

5. Verfahren (31) nach einem der vorstehenden Ansprüche, wobei das Anweisen der Endgeräte der ersten Gruppe von Endgeräten und/oder der zweiten Gruppe von Endgeräten, die Pilotsequenz zu übertragen, das Zuweisen einer einzelnen Pilotsequenz an die besagten Endgeräte (25) umfasst, so dass die Endgeräte, welche auf demselben Teil von Funkübertragungsressourcen übertragen, unterschiedliche Pilotsequenzen benutzten.

6. Verfahren (31) nach einem der vorstehenden Ansprüche, wobei die den Endgeräten (25) zugewiesenen Pilotsequenzen orthogonal oder halb-orthogonal zueinander sind.

7. Verfahren (31) nach einem der vorstehenden Ansprüche, wobei das Verfahren (31) mehrmals mit unterschiedlichen Endgeräten (25), die in der ersten Gruppe und der zweiten Gruppe umfasst sind, zu verschiedenen Durchführungszeiten des Verfahrens (31) durchgeführt wird (59).

8. Netzwerkelement (20, 21) für ein drahtloses Zugangsnetzwerk (11), wobei das Netzwerkelement (20, 21) für Folgendes betreibbar ist:

   - Anweisen (49) einer ersten Gruppe bestehend aus mindestens einem Endgerät (25) des drahtlosen Zugangsnetzwerks (11), eine Pilotsequenz zu übertragen;
   - Anweisen (51) einer zweiten Gruppe bestehend aus mindestens einem Endgerät (25) des drahtlosen Zugangsnetzwerks (11), über einen ersten Teil von Funkübertragungsressourcen ein Signal zu empfangen;
   - Empfangen (51) von Messdaten, welche das an den Endgeräten empfangene Signal kennzeichnen, von den Endgeräten (25) der zweiten Gruppe; und

- Schätzen (57) eines Kanals (29) zwischen mindestens einem Endgerätepaar (25) der ersten Gruppe oder der zweiten Gruppe in Abhängigkeit von den Messdaten;

**dadurch gekennzeichnet, dass** die erste Gruppe und die zweite Gruppe mehrere Endgeräte (25) umfassen, wobei die mehreren Endgeräte (25) der ersten Gruppe angewiesen werden, die Pilotsequenz simultan über den ersten Teil von Funkübertragungsressourcen zu übertragen.

9. Netzwerkelement (20, 21) nach Anspruch 8, wobei das Netzwerkelement (20, 21) für die Durchführung des Verfahrens (31) gemäß einem der Ansprüche 2 bis 7 betreibbar, vorzugsweise programmiert, ist.

10. Verfahren (33) zur netzwerkunterstützten Bakenübertragung, wobei das Verfahren (33) durch ein Funkendgerät (25) für ein drahtloses Zugangsnetzwerk (11) durchgeführt wird und umfasst:

- Empfangen (65) einer Anweisung, welche einen ersten Teil von Funkübertragungsressourcen anzeigt, von einem Netzwerkelement (20, 21) für das drahtlose Zugangsnetzwerk (11); und
- in Abhängigkeit von der Anweisung, Übertragen (71) einer Pilotsequenz auf dem ersten Teil der Funkressourcen, Empfangen (75) eines Signals auf dem ersten Teil der Funkressourcen und/oder Übertragen (77) von Messdaten, welche das empfangene Signal kennzeichnen;

**dadurch gekennzeichnet, dass** das empfangene Signal über den ersten Teil der Funkübertragungsressourcen von mehreren Endgeräten einer ersten Gruppe simultan übertragene überlagerte Pilotsequenzen umfasst.

11. Verfahren (33) nach Anspruch 10, wobei das Verfahren (33) das Ermitteln einer spezifischen Pilotsequenz in Abhängigkeit von der Anweisung umfasst.

12. Verfahren (33) nach Anspruch 10 oder 11, wobei die Messdaten mindestens einen Wert, welcher eine Leistung des empfangenen Signals beschreibt, umfassen.

13. Verfahren (33) nach Anspruch 10 oder 11, wobei die Messdaten einen zeitlichen Verlauf des empfangenen Signals oder eine komprimierte Darstellung davon umfassen.

14. Funkendgerät (25) für ein drahtloses Zugangsnetzwerk (11), wobei das Funkendgerät (25) für Folgendes betreibbar ist:

- Empfangen (65) einer Anweisung von einem Netzwerkelement (20, 21) für das drahtlose Zugangsnetzwerk (11), welche einen ersten Teil von Funkübertragungsressourcen anzeigt; und
- In Abhängigkeit von der Anweisung, Übertragen (71) einer Pilotsequenz auf dem ersten Teil der Funkressourcen, Empfangen (75) eines Signals auf dem ersten Teil der Funkressourcen und/oder Übertragen (77) von Messdaten, welche das empfangene Signal kennzeichnen;

**dadurch gekennzeichnet, dass** das empfangene Signal über den ersten Teil der Funkübertragungsressourcen von mehreren Endgeräten einer ersten Gruppe simultan übertragene überlagerte Pilotsequenzen umfasst.

15. Funkendgerät (25) nach Anspruch 14, wobei das Funkendgerät (25) für die Durchführung eines Verfahrens gemäß einem der Ansprüche 11 bis 13 betreibbar, vorzugsweise programmiert, ist.

**Revendications**

1. Procédé (31) de balisage assisté par réseau, le procédé étant exécuté par un élément de réseau (20, 21 ) pour un réseau d'accès sans fil (11) et comprenant les étapes suivantes

- commander (49) à un premier groupe d'au moins un terminal (25) du réseau d'accès sans fil (11) de transmettre une séquence pilote ;
- commander (51) à un deuxième groupe d'au moins un terminal (25) du réseau d'accès sans fil (11) de recevoir un signal sur une première partie de ressources de transmission radio ;
- recevoir (51) à partir des terminaux (25) du deuxième groupe des données de mesure qui caractérisent le signal reçu par les terminaux ; et

- estimer (57) un canal (29) entre au moins une paire de terminaux (25) du premier groupe ou du deuxième groupe en fonction des données de mesure ;

**caractérisé en ce que** le premier groupe et le deuxième groupe comprennent de multiples terminaux (25), dans lequel on commande aux multiples terminaux (25) du premier groupe de transmettre la séquence pilote simultanément sur la première partie de ressources de transmission radio.

2. Procédé (31) selon la revendication 1, dans lequel les données de mesure caractérisent une puissance du signal reçu par le terminal respectif (25).

3. Procédé (31) selon la revendication 2, dans lequel le procédé (31) consiste à commander (53) au deuxième groupe de multiples terminaux (25) de transmettre une séquence pilote sur une deuxième partie de ressources radio ; à commander (55) au premier groupe de multiples terminaux (25) de recevoir le signal sur la deuxième partie de ressources radio ; et à recevoir (55) à partir des terminaux (25) du premier groupe de terminaux les données de mesure.

4. Procédé (31) selon la revendication 1, dans lequel les données de mesure caractérisent un parcours du signal reçu dans le temps ou une représentation compressée de celui-ci.

5. Procédé (31) selon l'une des revendications précédentes, dans lequel la commande aux terminaux du premier groupe de terminaux et/ou du deuxième groupe de terminaux de transmettre la séquence pilote comprend l'attribution d'une séquence pilote unique auxdits terminaux (25) de sorte que les terminaux qui transmettent sur la même partie des ressources de transmission radio utilisent des séquences pilotes différentes.

6. Procédé (31) selon l'une des revendications précédentes dans lequel les séquences pilotes attribuées aux terminaux (25) sont orthogonales ou semi-orthogonales les unes par rapport aux autres.

7. Procédé (31) selon l'une des revendications précédentes, dans lequel le procédé (31) est exécuté (59) de multiples fois avec des terminaux différents (25) inclus dans le premier groupe et le deuxième groupe dans les différents temps d'exécution du procédé (31).

8. Élément de réseau (20, 21) pour un réseau d'accès sans fil (11), l'élément de réseau (20, 21) permettant

- de commander (49) à un premier groupe d'au moins un terminal (25) du réseau d'accès sans fil (11) de transmettre une séquence pilote ;
- de commander (51) à un deuxième groupe d'au moins un terminal (25) du réseau d'accès sans fil (11) de recevoir un signal sur une première partie de ressources de transmission radio ;
- de recevoir (51) à partir des terminaux (25) du deuxième groupe des données de mesure qui caractérisent le signal reçu par les terminaux ; et
- d'estimer (57) un canal (29) entre au moins une paire de terminaux (25) du premier groupe ou du deuxième groupe en fonction des données de mesure ;

**caractérisé en ce que** le premier groupe et le deuxième groupe comprennent de multiples terminaux (25), dans lequel on commande aux multiples terminaux (25) du premier groupe de transmettre la séquence pilote simultanément sur la première partie de ressources de transmission radio.

9. Élément de réseau (20, 21) selon la revendication 8, l'élément de réseau (20, 21) pouvant être utilisé, et de préférence programmé, pour exécuter un procédé (31) selon l'une des revendications 2 à 7.

10. Procédé (33) de balisage assisté par réseau, le procédé (33) étant exécuté par un terminal radio (25) pour un réseau d'accès sans fil (11) et comprenant les étapes suivantes

- recevoir (65) à partir d'un élément de réseau (20, 21) pour le réseau d'accès sans fil (11) une instruction indiquant une première partie de ressources de transmission radio ; et
- selon l'instruction, transmettre (71) une séquence pilote sur la première partie de ressources radio, recevoir (75) un signal sur la première partie de ressources radio et/ou transmettre (77) des données de mesure qui caractérisent le signal reçu ;

**caractérisé en ce que** le terminal radio appartient à un deuxième groupe de multiples terminaux et le signal reçu comprend des séquences pilotes superposées transmises simultanément sur la première partie de ressources de transmission radio à partir de multiples terminaux d'un premier groupe.

11. Procédé (33) selon la revendication 10, le procédé (33) comprenant la détermination d'une séquence pilote spécifique en fonction de l'instruction.

12. Procédé (33) selon la revendication 10 ou 11, dans lequel les données de mesure comprennent au moins une valeur qui décrit une puissance du signal reçu.

13. Procédé (33) selon la revendication 10 ou 11, dans lequel les données de mesure comprennent un parcours du signal reçu dans le temps ou une représentation compressée de celui-ci.

14. Terminal radio (25) pour un réseau d'accès sans fil (11), le terminal radio (25) permettant

- de recevoir (65) à partir d'un élément de réseau (20, 21) pour le réseau d'accès sans fil (11) une instruction indiquant une première partie de ressources de transmission radio ; et
- selon l'instruction, de transmettre (71) une séquence pilote sur la première partie de ressources radio, de recevoir (75) un signal sur la première partie de ressources radio et/ou de transmettre (77) des données de mesure qui caractérisent le signal reçu ;

**caractérisé en ce que** le terminal radio appartient à un deuxième groupe de multiples terminaux et le signal reçu comprend des séquences pilotes superposées transmises simultanément sur la première partie de ressources de transmission radio à partir de multiples terminaux d'un premier groupe.

15. Terminal radio (25) selon la revendication 14, le terminal radio (25) pouvant être utilisé, et de préférence programmé, pour exécuter un procédé selon l'une des revendications 11 à 13.

# Fig. 1

# Fig. 2

31

39 — 39

R — 41

E — 43

C — 45

G1 S$_l$ r — 49

G2 M$_j$ r — 51

G2 S$_i$ r' — 53

G1 M$_j$ r' — 55

57

N

59

Y

61

# Fig. 3

33 →

- 63
- I — 65
- r — 67
- N ← TX — 69
- Y
- S_i — 71
- N ← RX — 73
- Y
- M_j — 75
- P_i   CRRS — 77
- 79

## Fig. 4a

## Fig. 4b

**EP 2 770 764 B1**

**REFERENCES CITED IN THE DESCRIPTION**

**Patent documents cited in the description**

- US 20110258313 A1
- WO 2012113136 A1